# EUROPÄISCHE PATENTSCHRIFT

(11) **EP 1 043 200 B1**
(45) Veröffentlichungstag und Bekanntmachung des Hinweises auf die Patenterteilung: **20.07.2005**
(21) Anmeldenummer: 00107072.1
(22) Anmeldetag: 05.04.2000
(51) Int. Cl.: B60R 21/26

(54) **Gasgenerator**
Gas generator
Générateur de gaz

(30) Priorität: 06.04.1999 DE 29906173 U
(43) Veröffentlichungstag der Anmeldung: 11.10.2000
(73) Patentinhaber: TRW Airbag Systems GmbH, 84544 Aschau am Inn (DE)
(72) Erfinder: Meixner, Rudolf, 84539 Ampfing (DE); Müller, Werner, 84453 Mühldorf/Inn (DE); Ragner, Herbert, 84095 Furth (DE)
(74) Vertreter: Kitzhofer, Thomas, Dipl.-Ing.

(56) Entgegenhaltungen:
- EP-A- 0 888 935
- US-A- 5 219 178
- US-A- 5 611 566
- US-A- 5 660 412

## Beschreibung

Die Erfindung betrifft einen Gasgenerator, insbesondere für ein Fahrzeuginsassen-Rückhaltesystem, nach den Oberbegriffen der Ansprüche 1 und 3.

Bei einem aus der WO 97/41007 bekannten Gasgenerator sind Stromaufwärts einer Wand, die die Filterkammer begrenzt, eine Filterscheibe sowie ein Brennkammerfilter angeordnet. Die Filterscheibe ist federnd ausgebildet, um den tablettenförmigen Festtreibstoff lagesicher in der Brennkammer zu halten.

Bei sehr langen Brennkammern, insbesondere bei Brennkammern in sogenannten Rohrgasgeneratoren, bei denen der Gasgenerator ein langgestrecktes zylindrisches Gehäuse aufweist, kam es zu nicht reproduzierbaren und zu hohen Brennkammerdrücken. Darüber hinaus wurden die Filtereinheiten zu stark mit Partikeln, die beim Abbrennen des Treibstoffs entstehen, beaufschlagt. Aus diesem Grund verstopften die Filter zum Teil. Eine Lösung des genannten Problems sollten dünne Filter bilden, die quer zur Hauptströmungsrichtung des erzeugten Gases in der Brennkammer untergebracht waren und die die Brennkammer in zwei Teilkammern unterteilen. Aber auch hier gibt es Verbesserungsbedarf, da insbesondere bei Brennkammern, die mit viel Treibstoff gefüllt sind, im mittleren Bereich zwischen der Zündereinheit und dem Ausströmende der Brennkammer zu hohe Brennkammerdrücke erreicht wurden. In diesem Bereich ergibt sich, so wird vermutet, eine besonders ungünstige Konstellation aus extrem hoher Strömungsgeschwindigkeit des erzeugten Heißgases und einer hohen mechanischen Belastung des noch nicht vollständig verbrannten Festtreibstoffs infolge der Beaufschlagung mit heißen Partikeln. Es kann zu mechanischen Beschädigungen (Durchbrände) der Einbauten (z.B. des Filters) kommen. Darüber hinaus können die Brennkammerdrücke zu hoch und nicht reproduzierbar sein. Ein weiterer Nachteil ist die Zerstörung der noch nicht verbrannten Festtreibstofftabletten durch die hohe Strömungsgeschwindigkeit und die Partikel.

Um die oben genannten Nachteile hat bei einem gattungegemäßen Gasgenerator nach der en 0 888 935 A1 der Filter ein Mittelteil, das zumindest abschnittsweise konisch und in Richtung Brennkammerinneres zuläuft, wobei der Festtreibstoff an den konusförmigen Abschnitt seitlich angrenzt. Mit dem konischen, vorzugsweise kegelförmigen Mittelteil, das eine zentrale Einbuchtung in der Brennkammer hervorruft, wird die Menge des Festtreibstoffs im Bereich des Zentrums der Brennkammer, wo die oben genannte ungünstige Konstellation aus hoher Strömungsgeschwindigkeit und hoher Belastung aufgrund der Partikel auftritt, reduziert. Das erzeugte Druckgas kann über den konischen Filter früher aus der Brennkammer ausströmen. Es ergibt sich, wie Versuche gezeigt haben, eine bessere Reproduzierbarkeit der Brennkammerdrücke. Zudem wird der Filter nicht mehr durch die heißen Partikel beschädigt. Aufgrund des konisch zulaufenden Mittelteils hat der Filter eine größere Anlagerungsfläche für die Partikel als z.B. ein scheibenförmiger, in einer zylindrischen Brennkammer angeordneter Filter.

Die Erfindung schafft einen Gasgenerator, bei dem die Filterwirkung noch weiter verbessert wird. Dies wird durch einen Gasgenerator nach Anspruch 1 oder Anspruch 3 gelöst. Wenn, gemäß Anspruch 1, sich ein zylindrischer Abschnitt in Richtung Inneres der Brennkammer an ein kegelstumpfförmiges Mittelteil anschließt, entsteht insgesamt ein langer, die Brennkammer mit einer tiefen Einbuchtung versehender Filter.

Eine ganz ähnliche Konstruktion ist gemäß Anspruch 3 vorgesehen. Hier ist wenigstens eine gasdurchlässige Zwischenwand in der Brennkammer angeordnet, die die Brennkammer in wenigstens zwei, mit Treibstoff gefüllte Teilkammern unterteilt. Diese Teilkammern sind zur Zündereinheit hin offen, so daß der Treibstoff in beiden Teilkammern über das offene Ende der Teilkammern entzündet werden kann. Die Zwischenwand ist also zur Zündereinheit hin mindestens zum Großteil nicht vorhanden, vorzugsweise sogar ganz weggelassen, so daß zeitlich parallel der Treibstoff in beiden Kammern entzündet werden kann. Durch das Vorsehen dieser Zwischenwand wird die aktive Anlagefläche nochmals erhöht. Die Verwendung der zusätzlichen Zwischenwand ist insbesondere bei Brennkammern, die einen langen Strömungsweg aufweisen, von Vorteil. Die Zwischenwand kann einen Strömungskanal innerhalb der Brennkammer festlegen und gleichzeitig eine Oberfläche zur Verfügung stellen, an der sich Partikel anlagern können. Dadurch wird eine Siebwirkung erzielt und das konische Sieb entlastet. Gemäß Anspruch 3 ist die gasdurchlässige Zwischenwand zylindrisch ausgeführt.

Der Filter mit konischem Mittelteil ist insbesondere für einen Rohrgasgenerator mit zylindrischer Brennkammer geeignet, da hier besonders lange Strömungswege auftreten.

Der Filter ist vorzugsweise aus mehreren Lagen gefertigt, z.B. aus mehreren Lagen eines Metallsiebs oder eines Streckmetalls.

Vorzugsweise ist stromabwärts der Brennkammer eine Filterkammer angeordnet, die eine Wand mit Durchströmöffnungen hat. Stromaufwärts dieser Wand ist der konische Filter vorgesehen, der die Brennkammer von der Filterwand beabstandet. Zwischen diesem Filter und der Wand der Brennkammer kann ein Expansionsraum für heißes Gas gebildet werden.

Die Zwischenwand reduziert den durch das heiße Gas entstehenden Druck in der Brennkammer und verhindert ein Zerstören der Festtreibstofftabletten. Die Zündung des Treibstoffs insgesamt wird reproduzierbarer. Der so gebildete erfindungsgemäße Gasgenerator sorgt für einen schnellen Druckanstieg in dem angeschlossenen Verbraucher trotz Reduzierung des Drucks in der Brennkammer.

Das gleichzeitige Anzünden des Treibstoffs in den beiden Kammern kann dadurch erleichtert werden, daß die beiden Teilkammern zur Zündereinheit hin in einen gemeinsamen, mit Treibstoff gefüllten Verbindungsabschnitt der Brennkammer übergehen. Zuerst wird der Treibstoff im Verbindungsabschnitt durch die Zündereinheit verbrannt. Anschließend zündet dann der Treibstoff in jeder Teilkammer.

Die Zwischenwand endet hierzu vor der Verbindungskammer.

Um die Belastung der Zwischenwand durch die heißen Partikel zu reduzieren, ist die Zwischenwand vorzugsweise im wesentlichen parallel zu der Hauptströmungsrichtung innerhalb der Brennkammer angeordnet. Die Hauptströmungsrichtung wird durch die Form der Brennkammer und insbesondere durch die Anordnung der Zündereinheit und der Durchströmöffnungen in der Wand, die die Filterkammer zur Brennkammer hin abschließt, definiert.

Eine einfache Fertigung des konischen Filters samt Zwischenwand und eine einfache Montage läßt sich dadurch erreichen, daß der konische Filter und die Zwischenwand aneinander befestigt sind.

Der erfindungsgemäße Gasgenerator ist, wie bereits erwähnt, vorzugsweise ein Rohrgasgenerator mit einem langgestreckten zylindrischen Gehäuse. Dabei sind die Zündereinheit an einem axialen Ende und die Brennkammer sowie die Filterkammer axial hintereinander angeordnet. Der Konus des Filters ist koaxial zum Gehäuse angeordnet, erstreckt sich also in die Mitte der Brennkammer. Vorzugsweise ist die Zwischenwand auch koaxial zum Gehäuse angeordnet, also parallel zur Hauptströmungsrichtung, die axial verläuft.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
Figur 1 eine Längsschnittansicht durch eine Ausführungsform des erfindungsgemäßen Rohrgasgenerators, der zweistufig ausgebildet ist,
Figur 2 eine Längsschnittansicht durch einen einstufigen Rohrgasgenerator nach der Erfindung,
Figur 3 eine Längsschnittansicht und eine Draufsicht auf eine Ausführungsform des konusförmigen Filters,
Figur 4 eine Längsschnittansicht und eine Draufsicht auf eine weitere Ausführungsform des konusförmigen Filters,
Figur 5 eine Längsschnittansicht und eine Draufsicht auf eine Ausführungsform des konischen Filters mit daran angebrachter Zwischenwand, und
Figur 6 eine Längsschnittansicht und eine Draufsicht auf eine weitere Ausführungsform des konusförmigen Filters mit einem langen zylindrischen Abschnitt.

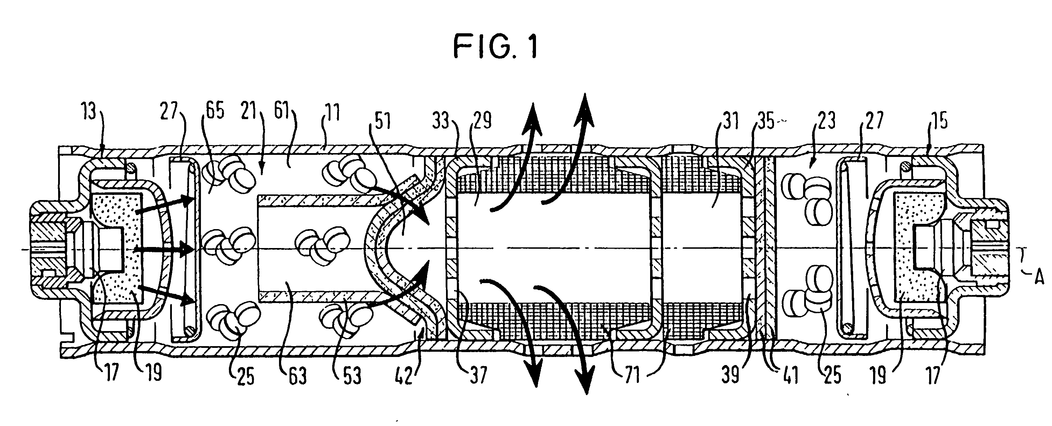

In Figur 1 ist ein Rohrgasgenerator mit einem langgestreckten, zylindrischen Gehäuse 11 gezeigt, in dem an seinen axialen Enden eine erste Zündereinheit 13 bzw. zweite Zündereinheit 15 sitzen. Die Zündereinheiten 13, 15 bestehen jeweils aus einem Zünder 17 und einer sich daran anschließenden Verstärkerladung 19. An die Zündereinheiten 13, 15 grenzen eine erste Brennkammer 21 bzw. zweite Brennkammer 23 an. Beide Brennkammern sind mit tablettenförmigem Festtreibstoff 25 gefüllt. Eine federnd angestellte, mit großen Öffnungen versehene Scheibe 27 in jeder Brennkammer 21, 23 dient zur Lagefixierung der Tabletten. Zwischen den beiden Brennkammern 21, 23 sind zwei Filterkammern 29, 31 angeordnet, wobei die Filterkammer 29 der Brennkammer 21 und die Filterkammer 31 der Brennkammer 23 zugeordnet ist. Wände 33 und 35 schließen die Filterkammern 29 bzw. 31 zur Brennkammer 21 bzw. 23 ab. Die Wände 33, 35 haben Durchströmöffnungen 37, 39.

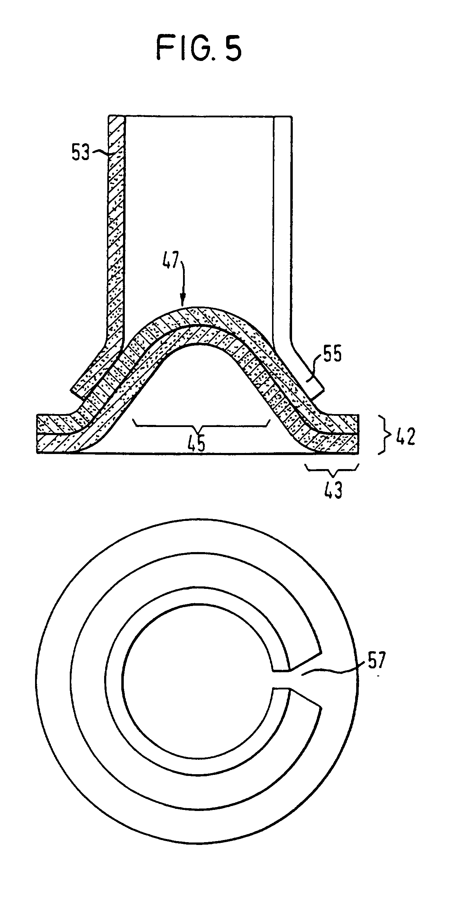

Die Brennkammer 23 wird zur Wand 35 hin durch zwei scheibenförmige Filter 41 begrenzt. Diese Filter sind flach. Die Brennkammer 21 wird zur Wand 33 hin von einem mehrlagigen Filter 42 begrenzt, der in Figur 5 vergrößert dargestellt ist. Der Filter 42 hat einen radial äußeren flachen, kreisringförmigen Mantelabschnitt 43, an den sich ein konusförmiger, genauer gesagt kegelförmiger Mittelabschnitt 45 anschließt. Der konusförmige Mittelabschnitt endet in einer stark abgerundeten Spitze 47. Durch den konusförmigen Mittelabschnitt, dessen Spitze 47 auf der Mittelachse A des Rohrgasgenerators liegt, erhält die Brennkammer 21 im Bereich ihres Ausströmendes (axiales Ende zur Filterkammer 29 hin) eine tiefe Einbuchtung. Damit ist im Bereich der Achse A weniger Treibstoff vorhanden. Stromabwärts des Filters 42 ist zwischen ihm und der Wand 33 kein Treibstoff vorhanden. In diesem Bereich ist eine Expansionskammer 51 gebildet. Wie den Figuren zu entnehmen ist, grenzt der Treibstoff unmittelbar seitlich an den konusförmigen Abschnitt des Filters an, so daß auch seitlich Gas durch den Filter strömen kann.

An dem konusförmigen Filter 42 ist eine zylindrische Zwischenwand 53 befestigt, die ebenfalls aus Filtermaterial, z.B. aus einfachem Lochblech, gefertigt ist. Die gasdurchlässige Zwischenwand 53 hat einen sich konusförmig erweiternden Ansatz 55 (Fig. 5), mit dem sie am Mittelteil 45 befestigt ist. Die Zwischenwand 53 ist ein geschlitzter, rohrförmiger Körper, wobei in der Draufsicht der Schlitz 57 zu erkennen ist. Dadurch ergibt sich eine Art Klemmwirkung der Zwischenwand auf dem konusförmigen Mittelteil 45.

Die Zwischenwand 53 ist koaxial zum Gehäuse 11 angeordnet und teilt die Brennkammer 21 in eine radial äußere, ringförmige, mit Treibstoff gefüllte Teilkammer 61 und eine radial innere, ebenfalls mit Treibstoff gefüllte Teilkammer 63. Beide Teilkammern 61, 63 gehen in einen gemeinsamen, ebenfalls mit Treibstoff gefüllten Verbindungsabschnitt 65 über, mit der die Brennkammer 21 zur Zündereinheit 13 abschließt. Die beiden Teilkammern 61, 63 sind zur Zündereinheit und zum Verbindungsabschnitt 65 hin vollständig offen.

Die Funktionsweise des erfindungsgemäßen Gasgenerators wird im folgenden erläutert. Je nachdem, wieviel Gas das an den Gasgenerator angeschlossene Rückhaltesystem benötigt, wird entweder die Zündereinheit 13 oder die Zündereinheit 15 oder beide aktiviert. Wird die Zündereinheit 15 aktiviert, so wird der Festtreibstoff in der Brennkammer 23 entzündet. Das Heißgas durchströmt den Filter 41 und gelangt über die Durchströmöffnungen 39 in die Filterkammer 31, von wo aus es durch Filter 71 radial nach außen strömt.

Wird die Zündereinheit 13 betätigt, so wird der Treibstoff in der Verbindungskammer 65 entzündet. Nahezu gleichzeitig wird anschließend der Treibstoff in den Teilkammern 61 und 63 entzündet. Das erzeugte Gas strömt axial (Hauptströmungsrichtung) durch die Teilkammern 61, 63 und in Pfeilrichtung durch den Filter 42 in die Expansionskammer 51, von dort aus über die Durchströmöffnungen 37 in die Filterkammer 29 und wieder nach außen. Es gibt auch Strömungen des heißen Gases zwischen den Teilkammern 61, 63. Beim Abbrennen des Treibstoffs lagert sich Schlacke in Form von heißen Partikeln an der Zwischenwand 53 und am Filter 42 an. Durch die Zwischenwand 53 und den Filter 42 wird eine hohe Filterwirkung erzielt und der Brennkammerdruck gering gehalten. Der Abbrand des Treibstoffes 25 wird durch die Zwischenwand 53 und den Filter 42 aber nicht verzögert. Vielmehr ergibt sich ein reproduzierbarer Druckverlauf und eine reproduzierbare Gasausströmmenge über der Zeit.

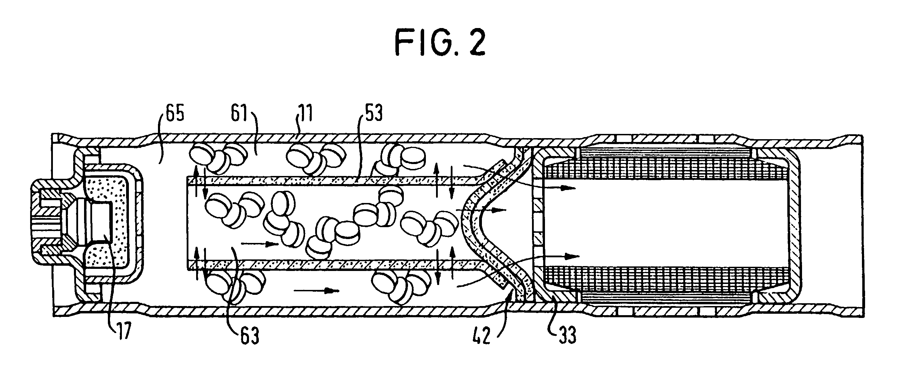

Die in Figur 2 gezeigte Ausführungsform unterscheidet sich von der in Figur 1 gezeigten nur dadurch, daß der Gasgenerator einstufig ausgebildet und die Brennkammer 21 wesentlich länger als die in Figur 1 gezeigte ist. Damit bei dieser Ausführungsform der Brennkammerdruck nicht zu hoch wird, ist die Zwischenwand 53 deutlich länger als bei der in Figur 1 dargestellten Ausführungsform. Aus dem Vergleich der Figuren 1 und 2 ist somit zu erkennen, daß mit größerem Volumen der Brennkammer, insbesondere mit größerer Länge der Brennkammer eine größere Filterfläche und eine längere Zwischenwand 53 vorgesehen sind.

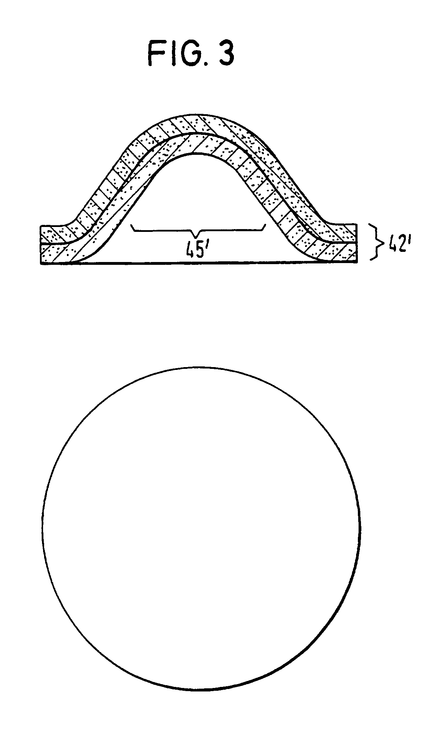

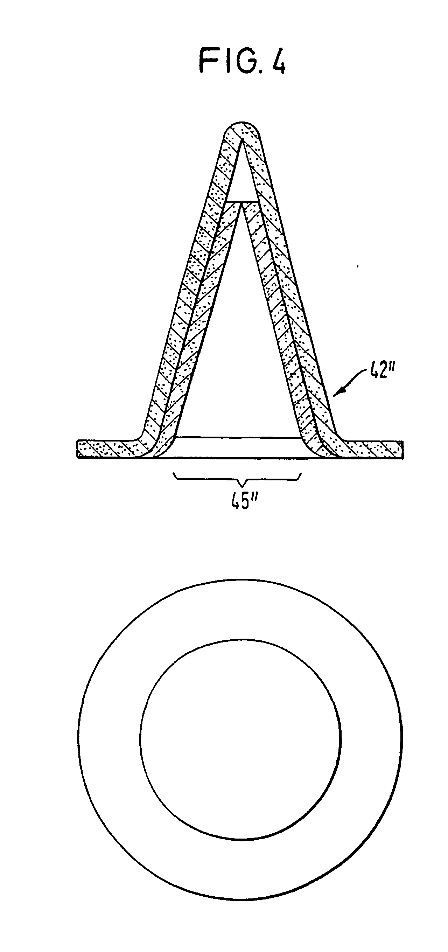

Alternative Geometrien des Filters zeigen die Figuren 3 and 4 mit einem Kurzen Filter 42' bzw einem Langen Filter 42" mit spitz zulaufendem Mittelteil 45".

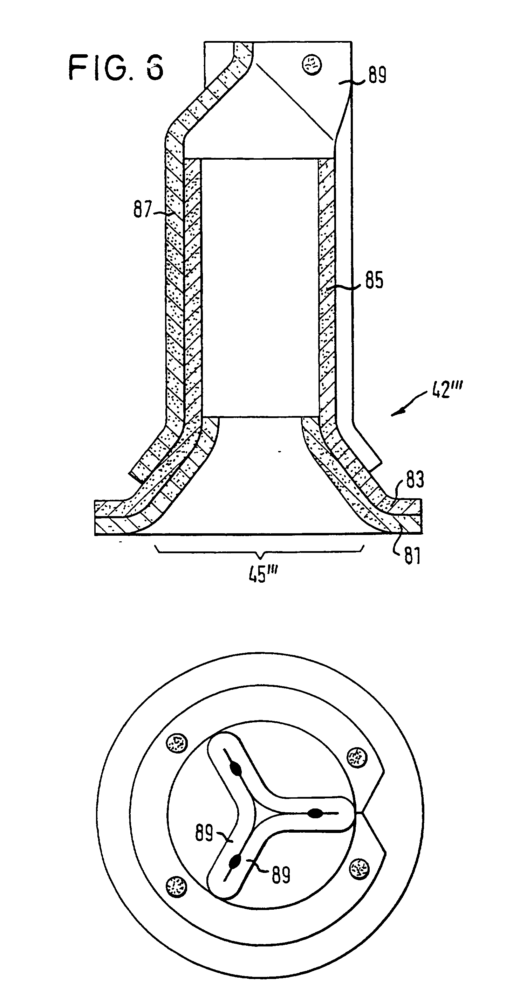

Bei noch längerer Brennkammer kann die in Figur 5 dargestellte Anordnung von Filter 42 mit angebrachter Zwischenwand 53 Verwendung finden. Ferner ist bei sehr langen Brennkammern auch die in Figur 6 dargestellte Ausführungsform des Filters 42''' geeignet. Hier ist der Filter aus drei Lagen zusammengesetzt. Eine innere Lage 81 weist ein kegelstumpfförmiges Mittelteil 45''' auf. An die Lage 81 grenzt radial nach außen eine Lage 83 an, die einen kegelstumpfförmigen Abschnitt und einen sich daran anschließenden zylindrischen Abschnitt 85 aufweist. Radial außerhalb der Lage 83 ist noch eine Lage 87 vorgesehen, die über das freie Ende des zylindrischen Abschnitts 85 hinausragt und in diesem Bereich an Wandungsabschnitten 89 zusammengepreßt und punktgeschweißt ist. Dadurch ist das Innere des Filters 42''' zur Brennkammer geschlossen. Geschlossen heißt in diesem Fall natürlich, daß durch den Filter Heißgas hindurchströmen kann. Es ist jedoch keine Anordnung wie in Figur 5 vorhanden, wo die Zwischenwand 53 zur Brennkammer hin komplett offen ist. Bei der in Figur 6 gezeigten Ausführungsform soll auch kein Treibstoff im Inneren des Filters 42''' angeordnet sein.

## Patentansprüche

1. Gasgenerator, insbesondere für ein Fahrzeuginsassen-Rückhaltesystem,
mit einer Brennkammer (21), die mit Festtreibstoff (25) gefüllt ist und die ein Ausströmende aufweist,
mit wenigstens einer Zündereinheit (13), die den Festtreibstoff (25) entzündet und mit wenigstens einem Filter (42; 42' bis 42'''), der am Ausströmende an den Festtreibstoff (25) angrenzt und die Brennkammer (21) begrenzt, wobei
der Filter (42; 42' bis 42''') ein Mittelteil (45; 45' bis 45''') hat, das zumindest abschnittsweise konisch und in Richtung Inneres der Brennkammer zuläuft und der Festtreibstoff an den konusförmigen Abschnitt seitlich angrenzt,
**dadurch gekennzeichnet, daß**
der Filter (42''') ein kegelstumpfförmiges Mittelteil (45''') hat, an das sich ein zylindrischer Abschnitt (85) in Richtung Inneres der Brennkammer (21) anschließt.

2. Gasgenerator nach Anspruch 1, **gekennzeichnet durch** wenigstens eine in der Brennkammer angeordnete gasdurchlässige Zwischenwand (53), die die Brennkammer (21) in wenigstens zwei, mit Treibstoff (25) gefüllte Teilkammern (61, 63) unterteilt, die beide zur Zündereinheit (13) offen sind, so daß der Treibstoff (25) in beiden Teilkammern (61, 63) über das offene Ende der Teilkammern (61, 63) entzündet wird.

3. Gasgenerator, insbesondere für ein Fahrzeuginsassen-Rückhaltesystem,
mit einer Brennkammer (21), die mit Festtreibstoff (25) gefüllt ist und die ein Ausströmende aufweist,
mit wenigstens einer Zündereinheit (13), die den Festtreibstoff (25) entzündet und
mit wenigstens einem Filter (42; 42' bis 42"'), der am Ausströmende an den Festtreibstoff (25) angrenzt und die Brennkammer (21) begrenzt, wobei
der Filter (42; 42' bis 42"') ein Mittelteil (45; 45' bis 45"') hat, das zumindest abschnittsweise konisch und in Richtung Inneres der Brennkammer zuläuft und der Festtreibstoff an den konusförmigen Abschnitt seitlich angrenzt,
**dadurch gekennzeichnet, daß**
wenigstens eine in der Brennkammer angeordnete gasdurchlässige, zylindrische Zwischenwand (53) vorgesehen ist, die die Brennkammer (21) in wenigstens zwei, mit Treibstoff (25) gefüllte Teilkammern (61, 63) unterteilt, die beide zur Zündereinheit (13) offen sind, so daß der Treibstoff (25) in beiden Teilkammern (61, 63) über das offene Ende der Teilkammern (61, 63) entzündet wird.

4. Gasgenerator nach Anspruch 3, **dadurch gekennzeichnet, daß** der Filter (42, 42'; 42") ein kegelförmiges Mittelteil (45; 45'; 45") hat.

5. Gasgenerator nach einem der Ansprüche 1 und 2, **dadurch gekennzeichnet, daß** das in Richtung Inneres der Brennkammer (21) ragende Ende des zylindrischen Abschnitts (85) durch Zusammenpressen von Wandungsabschnitten (89) geschlossen ist.

6. Gasgenerator nach einem der vorhergehenden Ansprüche, **dadurch gekennzeichnet, daß** der Filter (42; 42' bis 42"') aus mehreren Lagen besteht.

7. Gasgenerator nach einem der vorhergehenden Ansprüche, **dadurch gekennzeichnet, daß** stromabwärts der Brennkammer (21) eine Filterkammer (29) angeordnet ist, die eine Wand (33) mit Durchströmöffnungen (37) hat, und daß stromaufwärts der Wand (33) der konische Filter (42; 42' bis 42"') vorgesehen ist, der die Brennkammer (21) von der Filterkammer (29) beabstandet.

8. Gasgenerator nach Anspruch 7, **dadurch gekennzeichnet, daß** der Filter (42; 42' bis 42"') die Brennkammer (21) zur Filterkammer (29) hin abschließt und zwischen Filter (42; 42' bis 42"') und Wand (33) der Filterkammer (29) eine Expansionskammer (51) gebildet ist.

9. Gasgenerator nach einem der vorhergehenden Ansprüche, soweit auf Anspruch 2 oder 3 rückbezogen, **dadurch gekennzeichnet, daß** die Brennkammer (21) einen mit Treibstoff (25) gefüllten Verbindungsabschnitt (65) hat, der zwischen Zündereinheit (13) und Teilkammern (61, 63) liegt und der in die Teilkammern (61, 63) übergeht.

10. Gasgenerator nach Anspruch 9, **dadurch gekennzeichnet, daß** die Zwischenwand (53) vor dem Verbindungsabschnitt (65) endet.

11. Gasgenerator nach einem der vorhergehenden Ansprüche, soweit auf Anspruch 2 oder 3 rückbezogen, **dadurch gekennzeichnet, daß** stromabwärts der Brennkammer (21) eine Filterkammer (29) angeordnet ist, wobei Brennkammer (21) und Filterkammer (29) durch eine Wand (33) mit Durchströmöffnungen (37) voneinander getrennt sind, daß durch die Anordnung von Zünder (17) und Durchströmöffnungen (37) sowie der Geometrie der Brennkammer (21) eine Hauptströmungsrichtung für erzeugtes Heißgas vorgegeben ist, und daß sich die Zwischenwand (53) im wesentlichen parallel zu der Hauptströmungsrichtung erstreckt.

12. Gasgenerator nach einem der vorhergehenden Ansprüche, soweit auf Anspruch 2 oder 3 rückbezogen, **dadurch gekennzeichnet, daß** der konische Filter (42) und die Zwischenwand (53) aneinander befestigt sind.

13. Gasgenerator nach einem der vorhergehenden Ansprüche, soweit auf Anspruch 2 oder 3 rückbezogen, **dadurch gekennzeichnet, daß** der Gasgenerator ein Rohrgasgenerator mit einem langgestreckten zylindrischen Gehäuse (11) ist, daß die Zündereinheit (13) an einem axialen Ende angeordnet ist, daß die Zwischenwand (53) koaxial zum Gehäuse (11) und Brennkammer (21) und Filterkammer (29) axial hintereinander angeordnet sind.

14. Gasgenerator nach einem der vorhergehenden Ansprüche, **dadurch gekennzeichnet, daß** er als Rohrgasgenerator mit einem langgestreckten zylindrischen Gehäuse (11) ausgebildet ist, in dem Brennkammer (21) und Filterkammer (29) axial hintereinander angeordnet sind, und daß der Konus des Filters (42) koaxial im Gehäuse (11) angeordnet ist.

## Claims

1. A gas generator, in particular for a vehicle occupant restraint system,
comprising a combustion chamber (21), which is filled with solid propellant (25) and which has an outflow end,
at least one igniter unit (13) which ignites the solid propellant (25), and
at least one filter (42; 42' to 42"'), which adjoins the solid propellant (25) at the outflow end and delimits the combustion chamber (21),
the filter (42; 42' to 42"') having a central part (45; 45' to 45"') tapering at least in sections conically and towards the interior of the combustion chamber, and the solid propellant laterally adjoining the conical section,
**characterized in that**
the filter (42"') has a central part (45"') which is in the shape of a truncated cone and which is adjoined by a cylindrical section (85) towards the interior of the combustion chamber (21).

2. The gas generator according to claim 1, **characterized by** at least one gas-permeable intermediate wall (53) arranged in the combustion chamber, which divides the combustion chamber (21) into at least two partial chambers (61, 63) filled with propellant (25), both of which are open towards the igniter unit (13), so that the propellant (25) is ignited in both partial chambers (61, 63) via the open end of the partial chambers (61, 63).

3. A gas generator, in particular for a vehicle occupant restraint system,
comprising a combustion chamber (21), which is filled with solid propellant (25) and which has an outflow end,
at least one igniter unit (13) which ignites the solid propellant (25), and
at least one filter (42; 42' to 42"'), which adjoins the solid propellant (25) at the outflow end and delimits the combustion chamber (21),
the filter (42; 42' to 42"') having a central part (45; 45' to 45"') tapering at least in sections conically and towards the interior of the combustion chamber, and the solid propellant laterally adjoining the conical section,
**characterized in that** at least one gas-permeable, cylindrical intermediate wall (53) is provided which is arranged in the combustion chamber and divides the combustion chamber (21) into at least two partial chambers (61, 63) filled with propellant (25), both of which are open towards the igniter unit (13), so that the propellant (25) is ignited in both partial chambers (61, 63) via the open end of the partial chambers (61, 63).

4. The gas generator according to claim 3, **characterized in that** the filter (42, 42'; 42") has a conical central part (45; 45'; 45").

5. The gas generator according to either of claims 1 and 2, **characterized in that** the end of the cylindrical section (85) projecting towards the interior of the combustion chamber (21) is closed by the compressing of wall sections (89).

6. The gas generator according to any of the preceding claims, **characterized in that** the filter (42; 42' to 42"') consists of a plurality of layers.

7. The gas generator according to any of the preceding claims, **characterized in that** downstream of the combustion chamber (21) a filter chamber (29) is arranged, which has a wall (33) with through-flow openings (37), and that upstream of the wall (33) the conical filter (42; 42' to 42"') is provided, which provides a distance between the combustion chamber (21) and the filter chamber (29).

8. The gas generator according to claim 7, **characterized in that** the filter (42; 42' to 42"') closes off the combustion chamber (21) towards the filter chamber (29), and an expansion chamber (51) is formed between the filter (42; 42' to 42"') and the wall (33) of the filter chamber (29).

9. The gas generator according to any of the preceding claims, as far as dependent on claim 2 or 3, **characterized in that** the combustion chamber (21) has a connecting section (65) filled with propellant (25), the connecting section lying between the igniter unit (13) and the partial chambers (61, 63) and continuing into the partial chambers (61, 63).

10. The gas generator according to claim 9, **characterized in that** the intermediate wall (53) ends in front of the connecting section (65).

11. The gas generator according to any of the preceding claims, as far as dependent on claim 2 or 3, **characterized in that** downstream of the combustion chamber (21) a filter chamber (29) is arranged, the combustion chamber (21) and the filter chamber (29) being separated from each other by a wall (33) having through-flow openings (37), that by the arrangement of the igniter (17) and the through-flow openings (37) and due to the geometry of the combustion chamber (21) a main flow direction is defined for generated hot gas, and that the intermediate wall (53) extends substantially parallel to the main flow direction.

12. The gas generator according to any of the preceding claims, as far as dependent on claim 2 or 3, **characterized in that** the conical filter (42) and the intermediate wall (53) are fastened to each other.

13. The gas generator according to any of the preceding claims, as far as dependent on claim 2 or 3, **characterized in that** the gas generator is a tubular gas generator with an elongated cylindrical housing (11), that the igniter unit (13) is arranged at an axial end, that the intermediate wall (53) is arranged coaxially to the housing (11) and that the combustion chamber (21) and the filter chamber (29) are arranged axially one behind the other.

14. The gas generator according to any of the preceding claims, **characterized in that** it is constructed as a tubular gas generator with an elongated cylindrical housing (11) in which the combustion chamber (21) and the filter chamber (29) are arranged axially one behind the other, and that the cone of the filter (42) is arranged coaxially in the housing (11).

## Revendications

1. Générateur de gaz, en particulier pour un système de retenue de passager de véhicule,
comportant une chambre de combustion (21) qui est remplie d'un combustible solide (25) et qui présente une extrémité de sortie d'écoulement,
au moins une unité d'allumage (13) qui allume le combustible solide (25) et au moins un filtre (42 ; 42' à 42"') qui est adjacent au combustible, à l'extrémité de sortie d'écoulement, et qui limite la chambre de combustion (21),
le filtre (42 ; 42' à 42"') ayant une partie médiane (45 ; 45' à 45"') qui s'effile au moins par tronçons en forme conique et en direction de l'intérieur de la chambre de combustion et qui délimite latéralement le combustible solide sur le tronçon de forme conique,
**caractérisé en ce que**
le filtre (42"') a une partie médiane (45"') tronconique à laquelle se raccorde un tronçon cylindrique (85) en direction de l'intérieur de la chambre de combustion (21).

2. Générateur de gaz selon la revendication 1, **caractérisé par** au moins une paroi intermédiaire (53) perméable au gaz et agencée dans la chambre de combustion, laquelle subdivise la chambre de combustion (21) en au moins deux chambres partielles (61, 63) remplies de combustible (25) qui sont toutes les deux ouvertes vers l'unité d'allumage (13) de telle sorte que le combustible (25) est allumé dans les deux chambres partielles (61, 63) via l'extrémité ouverte des chambres partielles (61, 63).

3. Générateur de gaz, en particulier pour un système de retenue de passager de véhicule, comportant une chambre de combustion (21) qui est remplie d'un combustible solide (25) et qui présente une extrémité de sortie d'écoulement,
au moins une unité d'allumage (13) qui allume le combustible solide (25) et au moins un filtre (42 ; 42' à 42"') qui est adjacent au combustible (25), à l'extrémité de sortie d'écoulement, et qui limite la chambre de combustion (21),
le filtre (42 ; 42' à 42"') ayant une partie médiane (45 ; 45' à 45"') qui s'effile au moins par tronçons en forme conique et en direction de l'intérieur de la chambre de combustion et qui délimite latéralement le combustible solide sur le tronçon de forme conique,
**caractérisé en ce qu'**il est prévu au moins une paroi intermédiaire (53) cylindrique perméable au gaz et agencée dans la chambre de combustion, laquelle subdivise la chambre de combustion (21) en au moins deux chambres partielles (61, 63) remplies de combustible (25) qui sont toutes les deux ouvertes vers l'unité d'allumage (13) de telle sorte que le combustible (25) est allumé dans les deux chambres partielles (61, 63) via l'extrémité ouverte des chambres partielles (61, 63).

4. Générateur de gaz selon la revendication 3, **caractérisé en ce que** le filtre (42, 42' ; 42") a une partie médiane (45 ; 45', 45") de forme conique.

5. Générateur de gaz selon la revendication 1 et 2, **caractérisé en ce que** l'extrémité du tronçon cylindrique (85), qui fait saillie en direction de l'intérieur de la chambre de combustion (21), est fermée en comprimant les tronçons de paroi (89) l'un contre l'autre.

6. Générateur de gaz selon l'une des revendications précédentes, **caractérisé en ce que** le filtre (42 ; 42' à 42"') est constitué par plusieurs couches.

7. Générateur de gaz selon l'une des revendications précédentes, **caractérisé en ce qu'**en aval de la chambre de combustion (21) est agencée une chambre à filtre (29) qui a une paroi (33) avec des orifices de passage d'écoulement (37), et **en ce qu'**en amont de la paroi (33) est prévu le filtre conique (42 ; 42' à 42"') qui maintient la chambre de combustion (21) à distance de la chambre à filtre (29).

8. Générateur de gaz selon la revendication 7, **caractérisé en ce que** le filtre (42 ; 42' à 42"') ferme la chambre de combustion (21) vers la chambre à filtre (29), et **en ce qu'**entre le filtre (42 ; 42' à 42"') et la paroi (33) de la chambre à filtre (29) est formée une chambre à expansion (51).

9. Générateur de gaz selon l'une des revendications précédentes, dans la mesure où elles dépendent des revendications 2 ou 3, **caractérisé en ce que** la chambre de combustion (21) a un tronçon de liaison (65) rempli de combustible (65) qui se trouve entre l'unité d'allumage (13) et les chambres partielles (61, 63) et qui se transforme en les chambres partielles (61, 63).

10. Générateur de gaz selon la revendication 9, **caractérisé en ce que** la paroi intermédiaire (53) se termine devant le tronçon de liaison (65).

11. Générateur de gaz selon l'une des revendications précédentes, dans la mesure où elles dépendent des revendications 2 ou 3, **caractérisé en ce qu'**en aval de la chambre de combustion (21) est agencée une chambre à filtre (29), la chambre de combustion (21) et la chambre à filtre (29) étant séparées l'une de l'autre par une paroi (33) avec des orifices de passage d'écoulement (37), **en ce que** par l'agencement de l'allumeur (17) et des orifices de passage d'écoulement (37) ainsi que par la géométrie de la chambre de combustion (21) une direction principale d'écoulement est prédéterminée pour le gaz chaud engendré, et **en ce que** la paroi intermédiaire (53) s'étend sensiblement parallèlement à la direction principale d'écoulement.

12. Générateur de gaz selon l'une des revendications précédentes, dans la mesure où elles dépendent des revendications 2 ou 3, **caractérisé en ce que** le filtre conique (42) et la paroi intermédiaire (53) sont fixés l'un à l'autre.

13. Générateur de gaz selon l'une des revendications précédentes, dans la mesure où elles dépendent des revendications 2 ou 3, **caractérisé en ce que** le générateur de gaz est un générateur de gaz tubulaire avec un boîtier (11) cylindrique allongé, **en ce que** l'unité d'allumage (13) est agencée à une extrémité axiale, **en ce que** la paroi intermédiaire (53) est agencée coaxialement par rapport au boîtier (11) et **en ce que** la chambre de combustion (21) et la chambre à filtre (29) sont agencées axialement l'une derrière l'autre.

14. Générateur de gaz selon l'une des revendications précédentes, **caractérisé en ce qu'**il est réalisé sous forme de générateur de gaz tubulaire avec un boîtier (11) cylindrique allongé dans lequel la chambre de combustion (21) et la chambre à filtre (29) sont agencées axialement l'une derrière l'autre, et **en ce que** le cône du filtre (42) est agencé coaxialement dans le boîtier (11).
